# EUROPÄISCHE PATENTSCHRIFT

(11) **EP 2 619 842 B1**
(45) Veröffentlichungstag und Bekanntmachung des Hinweises auf die Patenterteilung: **02.05.2018**
(21) Anmeldenummer: 11761023.8
(22) Anmeldetag: 25.08.2011
(51) Int. Cl.: B60L 11/18, H01M 10/44, H02J 7/14, H01M 16/00, H02M 7/483

(54) **ENERGIEVERSORGUNGSNETZ UND VERFAHREN ZUM LADEN MINDESTENS EINER ALS ENERGIESPEICHER FÜR EINEN GLEICHSPANNUNGSZWISCHENKREIS DIENENDEN ENERGIESPEICHERZELLE IN EINEM ENERGIEVERSORGUNGSNETZ**
POWER SUPPLY SYSTEM, AND METHOD FOR CHARGING AT LEAST ONE POWER STORAGE CELL USED AS AN ENERGY STORAGE FOR AN INTERMEDIATE DC CIRCUIT IN A POWER SUPPLY SYSTEM
RÉSEAU D'ALIMENTATION ÉLECTRIQUE ET PROCÉDÉ POUR CHARGER AU MOINS UN ÉLÉMENT ACCUMULATEUR SERVANT D'ACCUMULATEUR D'ÉNERGIE POUR UN CIRCUIT CC INTERMÉDIAIRE DANS UN RÉSEAU D'ALIMENTATION ÉLECTRIQUE

(30) Priorität: 20.09.2010 DE 102010041040
(43) Veröffentlichungstag der Anmeldung: 31.07.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwäbisch Gmünd (DE)
(86) Internationale Anmeldenummer: PCT/EP2011/064642
(87) Internationale Veröffentlichungsnummer: WO 2012/038188

(56) Entgegenhaltungen:
- WO-A1-2006/112512
- DE-A1-102009 000 676
- US-A1- 2005 231 152

## Beschreibung

Die Erfindung betrifft ein Energieversorgungsnetz und ein Verfahren zum Laden mindestens einer als Energiespeicher für einen Gleichspannungszwischenkreis dienenden Energiespeicherzelle in einem Energieversorgungsnetz.

### Stand der Technik

Es zeichnet sich ab, dass in Zukunft sowohl bei stationären Anwendungen, wie z.B. Windkraftanlegen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, wird über einen Umrichter in Form eines Wechselrichters gesteuert. Kennzeichnend für derartige Systems ist ein sogenannter Gleichspannungszwischenkreis, über welchen eine Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.
Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlegen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 10 2010 027 857 A1 und DE 10 2010 027 861 A1 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert.

Im Gegensatz zu konventionellen Systemen, bei welchen eine elektrische Maschine über einen Wechselrichter gesteuert wird und durch einen davon getrenntem elektrischen Energiespeicher mit elektrischer Energie versorgt wird, steht bei den in den älteren Anmeldungen DE 10 2010 027 857 A1 und DE 10 2010 027 861 A1 beschriebenen Batterien keine konstante Gleichspannung zur Verfügung, so dass derartige Batterien nicht ohne weiteres in herkömmliche Energieversorgungsnetze, wie z.B. Bordnetze eines Elektro- oder Hybridfahrzeugs, integrierbar sind.

Die Druckschrift WO 2006/112512 A1 offenbart eine Batterievorrichtung mit mehreren Batteriemodulen, welche jeweils eine Vielzahl von Batteriezellen in einer Reihenschaltung aufweisen. Die Batterievorrichtung weist zudem mehrere Spannungsausgleichsschaltungen auf, die mit den jeweiligen der Batteriemodule korrespondieren und deren Ausgabespannungen equilibrieren.

### Offenbarung der Erfindung

Die vorliegende Erfindung schafft ein Energieversorgungsnetz, welches einen steuerbaren Energiespeicher, welcher der Steuerung und der elektrischen Energieversorgung einer n-phasigen elektrischen Maschine, mit n ≥ 1, dient, aufweist. Dabei umfasst der steuerbare Energiespeicher n parallele Energieversorgungszweige, welche jeweils mindestens zwei in Reihe geschaltete Energiespeichermodule aufweisen, welche jeweils mindestens eine elektrische Energiespeicherzelle mit einer zugeordneten steuerbaren Koppeleinheit umfassen. Die Energieversorgungszweige sind einerseits mit einem Bezugspotential, - im Folgenden als Bezugsschiene bezeichnet - und andererseits mit jeweils einer Phase der elektrischen Maschine verbindbar. In Abhängigkeit von Steuersignalen überbrücken die Koppeleinheiten entweder die jeweils zugeordneten Energiespeicherzellen oder sie schalten die jeweils zugeordneten Energiespeicherzellen in den Energieversorgungszweig. In mindestens einem der Energieversorgungszweige sind die Energiespeicherzellen des unmittelbar mit der Bezugsschiene verbundenen Energiespeichermoduls unmittelbar an die Bezugsschiene angeschlossen. Diese Energiespeicherzellen werden erfindungsgemäß als Energiespeicher für einen Gleichspannungszwischenkreis verwendet, aus welchem elektrische Verbraucher mit Gleichspannung versorgbar sind.

Die vorliegende Erfindung schafft auch ein Verfahren zum Laden mindestens einer als Energiespeicher für einen Gleichspannungszwischenkreis dienenden Energiespeicherzelle in einem erfindungsgemäßen Energieversorgungsnetz. Dabei werden in einer Betriebsphase der elektrischen Maschine, in welcher Strom aus der elektrischen Maschine in den steuerbaren Energiespeicher fließt, alle Koppeleinheiten, welche den als Energiespeicher für einen Gleichspannungszwischenkreis dienenden Energiespeicherzellen zugeordnet sind, derart gesteuert, dass die zugeordneten Energiespeicherzellen in den jeweiligen Energieversorgungszweig geschaltet werden.

### Vorteile der Erfindung

Der steuerbare Energiespeicher liefert während eines Motorbetriebs der elektrischen Maschine ausgangsseitig eine Wechselspannung zur Ansteuerung der elektrischen Maschine. Im Gegensatz zu konventionellen Systemen, bei welchen eine elektrische Maschine über einen Wechselrichter gesteuert wird und durch einen davon getrennten elektrischen Energiespeicher mit elektrischer Energie versorgt wird, steht jedoch keine Gleichspannung zur unmittelbaren Energieversorgung von elektrischen Verbrauchern, wie z.B. Hochvoltverbrauchern in einem Fahrzeugbordnetz, oder als Eingangsgröße für einen Gleichspannungswandler zur Verfügung.

Die Erfindung basiert auf der Grundidee, zumindest in einem der Energieversorgungszweige das unmittelbar mit der Bezugsschiene verbundene Energiespeichermodul derart auszugestalten, dass die Energiespeicherzellen dieses Energiespeichermoduls direkt an die Bezugsschiene angeschlossen sind. Das heißt mit anderen Worten, dass die zugeordnete Koppeleinheit derart ausgestaltet ist, dass sie die Energiespeicherzellen zwar überbrücken oder in den Energieversorgungszweig schalten kann, die elektrische Verbindung der Energiespeicherzellen zur Bezugsschiene aber nicht unterbrechen kann. Derart verschaltete Energiespeicherzellen können dann unmittelbar als Energiespeicher für einen daran anzuschließenden Gleichspannungszwischenkreis genutzt werden. Auf diese Weise kann die zur Versorgung von elektrischen Verbrauchern erforderliche Gleichspannung mit äußerst geringem Hardwareaufwand erzeugt werden.

Das Laden der als Energiespeicher für den Gleichspannungszwischenkreis dienenden Energiespeicherzellen kann während des Betriebs der elektrischen Maschine erfolgen. Hierzu werden die Energiespeicherzellen einfach während einer Betriebsphase, in welcher Strom aus der elektrischen Maschine in den steuerbaren Energiespeicher zurückgespeist wird in den jeweiligen Energieversorgungszweig geschaltet. Die dadurch für die elektrische Maschine reduzierte Klemmenspannung kann über eine entsprechende Anpassung des zughörigen Raumzeigers kompensiert werden.

Um die Ausfallsicherheit und die Gesamtkapazität des Energiespeichers für den Gleichspannungszwischenkreis zu erhöhen, ist es gemäß einer Ausführungsform der Erfindung vorgesehen, in allen Energieversorgungszweigen die Energiespeicherzellen der unmittelbar mit der Bezugsschiene verbundenen Energiespeichermodule unmittelbar an die Bezugsschiene anzuschließen und all diese Energiespeicherzellen als parallel geschaltete Energiespeicher für den Gleichspannungszwischenkreis zu nutzen.

Gemäß einer Ausführungsform der Erfindung, werden dabei die als Energiespeicher für den Gleichspannungszwischenkreis dienenden Energiespeicherzellen jeweils über mindestens eine Diode mit dem Gleichspannungszwischenkreis verbunden. Auf diese Weise wird erreicht, dass jeweils automatisch das stärkste Energiespeichermodul, das heißt dasjenige Energiespeichermodul, dessen Energiespeicherzellen aktuell die größte Ladung aufweisen, belastet wird.

Um Stromspitzen zu vermeiden, können die als Energiespeicher für den Gleichspannungszwischenkreis dienenden Energiespeicherzellen über mindestens eine Induktivität mit dem Gleichspannungszwischenkreis verbunden sein.

Eine weitere Ausführungsform der Erfindung sieht vor, dass eine Gesamtspannung der als Energiespeicher für den Gleichspannungszwischenkreis dienenden Energiespeicherzellen kleiner oder gleich 60 Volt ist, so dass keine zusätzlichen Absichermaßnahmen, z.B. hinsichtlich Berührschutzes, getroffen werden müssen.

Gemäß einer Ausführungsform der Erfindung weist der Gleichspannungszwischenkreis einen Zwischenkreiskondensator auf, welcher elektrisch einerseits mit der Bezugsschiene und andererseits mit einem der Bezugsschiene abgewandten Anschluss der als Energiespeicher dienenden Energiespeicherzellen verbunden ist. Durch die Kontaktierung direkt an den Energiespeicherzellen, wird eine Beeinflussung der Funktion der Energiespeicherzellen als Energiespeicher für den Gleichspannungszwischenkreis durch die den Energiespeicherzellen zugeordneten Koppeleinheit ohne jeglichen zusätzlichen Aufwand sicher vermieden.

Alternativ dazu kann der der Zwischenkreiskondensator aber auch einerseits mit der Bezugsschiene und andererseits mit einem der Bezugsschiene abgewandten Ausgang des Energiespeichermoduls, welches die als Energiespeicher dienenden Energiespeicherzellen umfasst, verbunden sein.

Mit Hilfe eines ersten Gleichspannungswandlers, welcher dem Zwischenkreiskondensator nachgeschaltet ist, kann ein erstes Spannungsniveau des Zwischenkreiskondensators an ein zweites Spannungsniveau eines weiteren Energiespeichers angepasst werden. Auf diese Weise lässt sich ein Zweispannungs-Energieversorgungsnetz realisieren.

Alternativ oder zusätzlich ist es auch möglich, dem Zwischenkreiskondensator einen zweiten Gleichspannungswandler vorzuschalten, welcher eine Gesamtspannung der als Energiespeicher für den Gleichspannungszwischenkreis dienenden Energiespeicherzellen an ein erstes Spannungsniveau des Zwischenkreiskondensators anpasst.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer ersten Ausführungsform eines erfindungsgemäßen Energieversorgungsnetzes,
- Fig. 2: eine schematische Darstellung einer zweiten Ausführungsform eines erfindungsgemäßen Energieversorgungsnetzes und
- Fig. 3: eine schematische Darstellung einer dritten Ausführungsform eines erfindungsgemäßen Energieversorgungsnetzes.

### Ausführungsformen der Erfindung

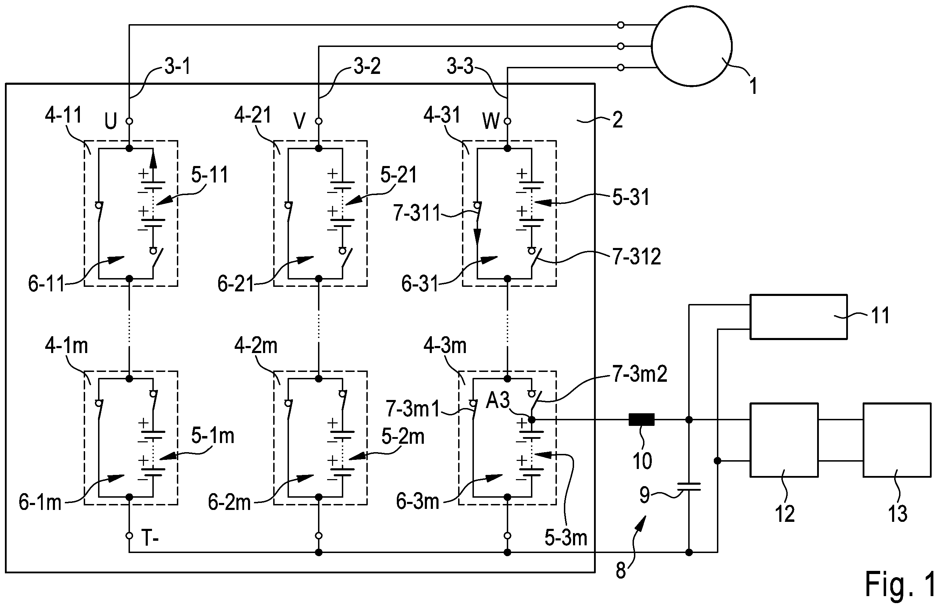

Figur 1 zeigt ein schematisch eine Ausführungsform eines erfindungsgemäßen Energieversorgungsnetzes. An eine dreiphasige elektrische Maschine 1 ist ein steuerbarer erster Energiespeicher 2 angeschlossen. Der steuerbare erste Energiespeicher 2 umfasst drei Energieversorgungszweige 3-1, 3-2 und 3-3, welche einerseits mit einem Bezugspotential T- (Bezugsschiene), welches im dargestellten Ausführungsbeispiel ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen 5-11 bis 5-1m bzw. 5-21 bis 5-2m bzw. 5-31 bis 5-3m. Die Energiespeichermodule 4 umfassen des Weiteren jeweils eine Koppeleinheit 6-11 bis 6-1m, 6-21 bis 6-2m und 6-31 bis 6-3m , welche den Energiespeicherzellen 5-11 bis 5-1m bzw. 5-21 bis 5-2m bzw. 5-31 bis 5-3m des jeweiligen Energiespeichermoduls 4 zugeordnet ist. In der dargestellten Ausführungsvariante werden die Koppeleinheiten 6 jeweils durch zwei steuerbare Schaltelemente gebildet, welche aus Gründen der Übersichtlichkeit lediglich in dem Energieversorgungskreis 3-3 mit Bezugszeichen 7-311 und 7-312 bis 7-3m1 und 7-3m2 versehen sind. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen beider Schaltelemente 7 einer Kopplungseinheit 6 zu unterbrechen. Alternativ können die Energiespeicherzellen 5 durch Schließen jeweils eines der Schaltelemente 7 einer Koppeleinheit 6 entweder überbrückt werden, z.B.

Schließen des Schalters 7-311, oder in den jeweiligen Energieversorgungszweig 3 geschaltet werden, z.B. Schließen des Schalters 7-312.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren ersten Energiespeicher 2 gesteuert werden. Der steuerbare erste Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 ist im dargestellten Ausführungsbeispiel als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren ersten Energiespeicher 2.

Im dargestellten Ausführungsbeispiel weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

Im dargestellten Ausführungsbeispiel werden die Koppeleinheiten 6 jeweils durch zwei steuerbare Schaltelemente 7 gebildet. Die Koppeleinheiten 6 können aber auch durch mehr oder weniger steuerbare Schaltelemente realisiert sein, solange die notwendigen Funktionen (Unterbrechen des Energieversorgungszweiges, Überbrücken der Energiespeicherzellen und Schalten der Energiespeicherzellen in den Energieversorgungszweig) realisierbar sind. Beispielhafte alternative Ausgestaltungen einer Koppeleinheit ergeben sich aus den älteren Anmeldungen DE 10 2010 027 857 A1 und DE 10 2010 027 861 A1. Darüber hinaus ist es aber auch denkbar, dass die Koppeleinheiten Schaltelemente in Vollbrückenschaltung aufweisen, was die zusätzliche Möglichkeit einer Spannungsumkehr am Ausgang des Energiespeichermoduls bietet.

Der steuerbare erste Energiespeicher 2 liefert während eines Motorbetriebs der elektrischen Maschine 1 ausgangsseitig eine Wechselspannung zur Ansteuerung der elektrischen Maschine 1. Im Gegensatz zu konventionellen Systemen, bei welchen eine elektrische Maschine über einen Wechselrichter gesteuert wird und durch einen davon getrennten elektrischen Energiespeicher mit elektrischer Energie versorgt wird, steht jedoch keine Gleichspannung zur unmittelbaren Energieversorgung von elektrischen Verbrauchern, wie z.B. Hochvoltverbrauchern in einem Fahrzeugbordnetz, oder als Eingangsgröße für einen Gleichspannungswandler zur Verfügung.

Deshalb sind die Energiespeichermodule 4-1m, 4-2m und 4-3m, welche unmittelbar, das heißt ohne Zwischenschaltung weiterer Energiespeichermodule 4, mit der Bezugsschiene T- verbunden sind, derart ausgestaltet, dass die Energiespeicherzellen 5-1m bzw. 5-2m bzw. 5-3m dieser Energiespeichermodule 4-1m, 4-2m und 4-3m einerseits direkt an die Bezugsschiene T- angeschlossen sind. Konkret wird dies dadurch realisiert, dass die entsprechenden Schaltelemente 7 der zugeordneten Koppeleinheiten 6, z.B. das Schaltelement 7-3m2 der Koppeleinheit 6-3m nicht zwischen den Energiespeicherzellen 5 und der Bezugsschiene T-, sondern in der der Bezugsschiene abgewandten Anschlussleitung der Energiespeicherzellen 5 angeordnet ist. Die Energiespeicherzellen eines Energiespeichermoduls, im dargestellten Ausführungsbeispiel die Energiespeicherzellen 5-3m des Energiespeichermoduls 4-3m weisen andererseits, das heißt auf der der Bezugsschiene T- abgewandten Seite der Energiespeicherzellen 5-3m, einen Anschluss A3 für einen Gleichspannungszwischenkreis 8 auf. Es sei darauf hingewiesen, dass es für die Anwendbarkeit der Erfindung selbstverständlich ausreichend ist, wenn diejenigen Energiespeichermodule 4 in der beschrieben Art und Weise ausgestaltet sind, welche an einen Gleichspannungszwischenkreis 8 angeschlossen werden.

Alternativ zu der dargestellten Ausführungsform kann der Anschluss A3 aber auch an einem der Bezugsschiene T- abgewandten Ausgang des Energiespeichermoduls 4-3m, welches die als Energiespeicher dienenden Energiespeicherzellen 5-3m umfasst, angeordnet sein.

Der Gleichspannungszwischenkreis 8 umfasst einen Zwischenkreiskondensator 9, welcher einerseits mit der Bezugsschiene T- und andererseits über eine Induktivität 10, welche Stromspitzen vermeiden soll, mit dem Anschluss A3 der Energiespeicherzellen 5-3m verbunden. Die Energiespeicherzellen 5-3m dienen damit als Energiespeicher für den Gleichspannungszwischenkreis 8, aus welchem elektrische Verbraucher 11 mit Gleichspannung versorgbar sind.

Dem Zwischenkreiskondensator 9 nachgeschaltet ist ein erster Gleichspannungswandler 12, welcher ein erstes Spannungsniveau des Zwischenkreiskondensators 9 an ein zweites Spannungsniveau eines weiteren Energiespeichers 13 anpasst, aus welchem elektrische Verbraucher 14 mit Gleichspannung auf dem zweiten Spannungsniveau versorgbar sind. Der weitere Energiespeicher kann dabei beispielsweise als Batterie oder auch als Supercap ausgebildet sein. Je nach den konkreten Spannungsniveaus kann der erste Gleichspannungswandler 12 mit oder ohne galvanische Trennung ausgeführt sein. Ist das Spannungsniveau des Gleichspannungszwischenkreises 8 zur Versorgung aller elektrischen verbrauchter bereits ausreichend, kann auf den Gleichspannungswandler 12 selbstverständlich auch verzichtet werden.

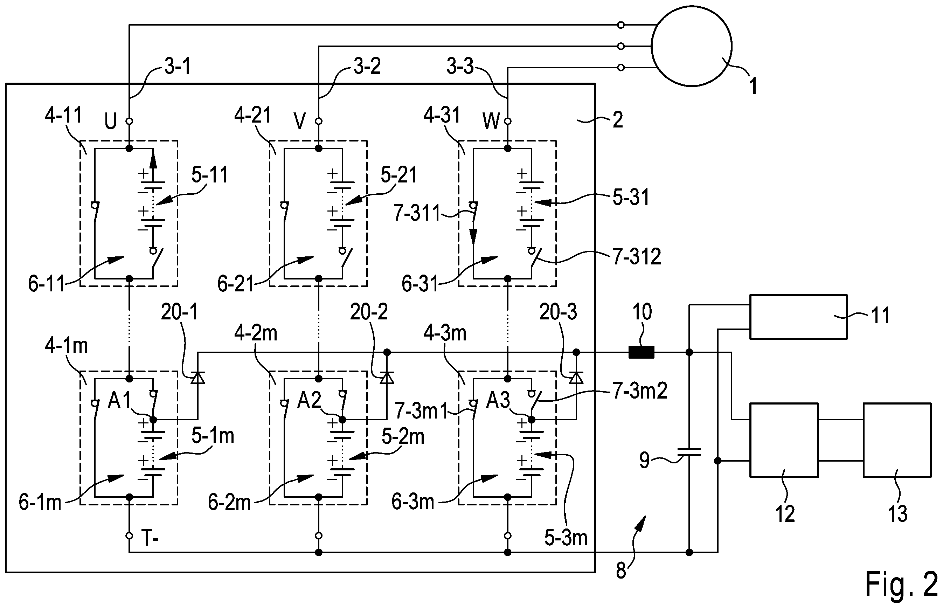

Figur 2 zeigt eine zweite Ausführungsform eines erfindungsgemäßen Energieversorgungsnetzes. Diese Ausführungsform unterscheidet sich von der ersten Ausführungsform dadurch, dass die direkt mit der Bezugsschiene T- verbundenen Energiespeichermodule 5-1m, 5-2m und 5-3m aller Energieversorgungszweige 3-1 bzw. 3-2 bzw. 3-3 einen Anschluss A1 bzw. A2 bzw. A3 aufweisen, über welchen die Energieversorgungszellen in Parallelschaltung mit dem Gleichspannungszwischenkreis 8 verbunden sind. Auf diese Weise wird die Ausfallsicherheit sowie die Gesamtkapazität des Energiespeichers des Gleichspannungszwischenkreises 8 erhöht. Zur gegenseitigen Entkopplung sind zu den Energiespeicherzellen 5-1m, 5-2m und 5-3m jeweils Dioden 20-1 bzw. 20-2 bzw. 20-3 in Reihe geschaltet. Auf diese Weise wird automatisch immer das Energiespeichermodul 4 belastet, dessen Energiespeicherzellen 5 aktuell die größte Ladung aufweisen. Auch in diesem Fall können die Anschlüsse A1, A2 und A3 alternativ zu der dargestellten Ausführungsform an dem der Bezugsschiene T- abgewandten Ausgang der jeweiligen Energiespeichermodule 4-1m bzw. 4-2m bzw. 4-3m angeordnet sein.

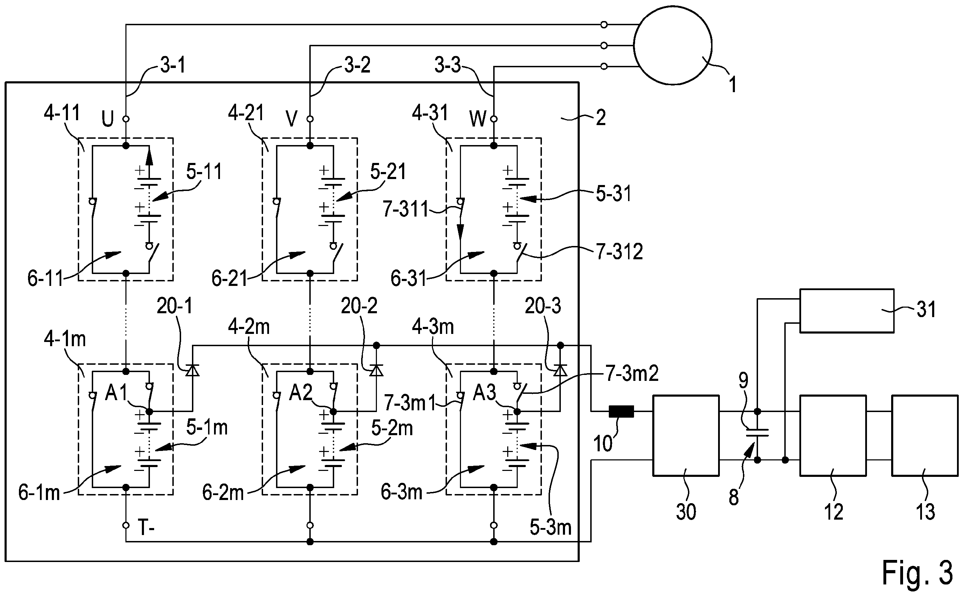

Falls in dem Gleichspannungszwischenkreis 8 ein Spannungsniveau erforderlich ist, welches über der Gesamtspannung der als Energiespeicher für den Gleichspannungszwischenkreis 8 dienenden Energiespeicherzellen 5-1m, 5-2m, 5-3m liegt, so kann dem Zwischenkreiskondensator 9 auch ein zweiter Gleichspannungswandler 30 vorgeschaltet werden (vgl. Figur 3). Dieser kann dann die Gesamtspannung der als Energiespeicher für den Gleichspannungszwischenkreis 8 dienenden Energiespeicherzellen 5-1m, 5-2m, 5-3m an ein erstes Spannungsniveau des Zwischenkreiskondensators 9, welches z.B. im Hochvoltbereich liegen kann, anpassen. Aus dem Gleichspannungszwischenkreis 8 können dann z.B. Hochvoltverbraucher 31 mit Energie versorgt werden. Je nach den konkreten Spannungsniveaus können die Gleichspannungswandler 12 und 30 mit oder ohne galvanische Trennung ausgeführt sein. Es sei darauf hingewiesen, dass der erste Gleichspannungswandler 12 je nach konkreter Anforderung an das Energieversorgungsnetz selbstverständlich auch entfallen kann.

Das Laden der als Energiespeicher für den Gleichspannungszwischenkreis 8 dienenden Energiespeicherzellen 5-1m, 5-2m, 5-3m kann während des Betriebs der elektrischen Maschine 1 erfolgen. Hierzu werden die Energiespeicherzellen 5-1m, 5-2m, 5-3m durch entsprechende Ansteuerung der zugeordneten Koppeleinheiten 6-1m bzw. 6-2m bzw. 6-3m während einer Betriebsphase, in welcher Strom aus der elektrischen Maschine 1 in den steuerbaren Energiespeicher 2 zurückgespeist wird in den jeweiligen Energieversorgungszweig 3-1 bzw. 3-2 bzw. 3-3 geschaltet. Die dadurch für die elektrische Maschine 1 reduzierte Klemmenspannung.kann über eine entsprechende Anpassung des zughörigen Raumzeigers kompensiert werden.

## Patentansprüche

1. Energieversorgungsnetz mit einem steuerbaren Energiespeicher (2), welcher der Steuerung und der elektrischen Energieversorgung einer n-phasigen elektrischen Maschine (1), mit n ≥ 1, dient, wobei
- der steuerbare Energiespeicher (2) n parallele Energieversorgungszweige (3-1, 3-2, 3-3) aufweist, welche
▪ jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
▪ einerseits mit einer Bezugsschiene (T-) verbindbar sind und
▪ andererseits mit jeweils einer Phase (U, V, W) der elektrischen Maschine (1) verbindbar sind,
wobei die Koppeleinheiten (6) in Abhängigkeit von Steuersignalen die jeweils zugeordneten Energiespeicherzellen (5) überbrücken oder die jeweils zugeordneten Energiespeicherzellen (5) in den jeweiligen Energieversorgungszweig (3-1, 3-2; 3-3) schalten, und
- in mindestens einem der Energieversorgungszweige (3-3) die Energiespeicherzellen (5) des unmittelbar mit der Bezugsschiene (T-) verbundenen Energiespeichermoduls (4-3m) unmittelbar an die Bezugsschiene (T-) angeschlossen sind und als Energiespeicher für einen Gleichspannungszwischenkreis (8) dienen.

2. Energieversorgungsnetz nach Anspruch 1, wobei in allen Energieversorgungszweigen (3-1, 3-2, 3-3) die Energiespeicherzellen (5-1m, 5-2m, 5-3m) der unmittelbar mit der Bezugsschiene (T-) verbundenen Energiespeichermodule (4-1m, 4-2m, 4-3m) unmittelbar an die Bezugsschiene (T-) angeschlossen sind und als parallel geschaltete Energiespeicher für den Gleichspannungszwischenkreis (8) dienen.

3. Energieversorgungsnetz nach Anspruch 2, wobei die als Energiespeicher für den Gleichspannungszwischenkreis (8) dienenden Energiespeicherzellen (5-1m, 5-2m, 5-3m) jeweils über mindestens eine Diode (20-1, 20-2, 20-3) mit dem Gleichspannungszwischenkreis (8) verbunden sind.

4. Energieversorgungsnetz nach einem der Ansprüche 1 bis 3, wobei die als Energiespeicher für den Gleichspannungszwischenkreis (8) dienenden Energiespeicherzellen (5-1m, 5-2m, 5-3m) über mindestens eine Induktivität (10) mit dem Gleichspannungszwischenkreis (8) verbunden sind.

5. Energieversorgungsnetz nach einem der vorhergehenden Ansprüche, wobei eine Gesamtspannung der als Energiespeicher für den Gleichspannungszwischenkreis (8) dienenden Energiespeicherzellen (5-1m, 5-2m, 5-3m) kleiner oder gleich 60 Volt ist.

6. Energieversorgungsnetz nach einem der vorhergehenden Ansprüche, wobei der Gleichspannungszwischenkreis (8) einen Zwischenkreiskondensator (9) aufweist, welcher elektrisch einerseits mit der Bezugsschiene (T-) und andererseits mit einem der Bezugsschiene (T-) abgewandten Anschluss (A1, A2, A3) der als Energiespeicher dienenden Energiespeicherzellen (5-1m, 5-2m, 5-3m) verbunden ist.

7. Energieversorgungsnetz nach einem Ansprüche 1 bis 5, wobei der Gleichspannungszwischenkreis (8) einen Zwischenkreiskondensator (9) aufweist, welcher elektrisch einerseits mit der Bezugsschiene (T-) und andererseits mit einem Anschluss (A1, A2, A3) an einem der Bezugsschiene (T-) abgewandten Ausgang der Energiespeichermodule (4-1m, 4-2m, 4-3m), welche die als Energiespeicher dienenden Energiespeicherzellen (5-1m, 5-2m, 5-3m) umfassen; verbunden ist.

8. Energieversorgungsnetz nach einem der Ansprüche 6 oder 7, wobei dem Zwischenkreiskondensator (9) ein erster Gleichspannungswandler (12) nachgeschaltet ist, welcher ein erstes Spannungsniveau des Zwischenkreiskondensators (9) an ein zweites Spannungsniveau eines weiteren Energiespeichers (13) anpasst.

9. Energieversorgungsnetz nach einem der Ansprüche 6 bis 8, wobei dem Zwischenkreiskondensator (9) ein Gleichspannungswandler (30) vorgeschaltet ist, welcher eine Gesamtspannung der als Energiespeicher für den Gleichspannungszwischenkreis (8) dienenden Energiespeicherzellen (5-1m, 5-2m, 5-3m) an ein erstes Spannungsniveau des Zwischenkreiskondensators (9) anpasst.

10. Verfahren zum Laden mindestens einer als Energiespeicher für einen Gleichspannungszwischenkreis (8) dienenden Energiespeicherzelle (5-1m; 5-2m; 5-3m) in einem Energieversorgungsnetz gemäß einem der Ansprüche 1 bis 9, bei dem in einer Betriebsphase der elektrischen Maschine (1), in welcher Strom aus der elektrischen Maschine (1) in den steuerbaren Energiespeicher (2) fließt, alle Koppeleinheiten (6-1m, 6-2m, 6-3m), welche den als Energiespeicher für einen Gleichspannungszwischenkreis (8) dienenden Energiespeicherzellen (5-1m, 5-2m, 5-3m) zugeordnet sind, derart gesteuert werden, dass die zugeordneten Energiespeicherzellen (5-1m, 5-2m, 5-3m) in den jeweiligen Energieversorgungszweig (3-1; 3-2; 3-3) geschaltet werden.

## Claims

1. Energy supply system having a controllable energy store (2) serving to control and supply electrical energy to an n-phase electric machine (1), where n ≥ 1, wherein
- the controllable energy store (2) has n parallel energy supply branches (3-1, 3-2, 3-3), which
• have in each case at least two energy storage modules (4), which are connected in series and comprise in each case at least one electrical energy storage cell (5) having an associated controllable coupling unit (6),
• can be connected on one side to a reference rail (T-) and
• can be connected on the other side to in each case one phase (U, V, W) of the electric machine (1),
wherein, depending on control signals, the coupling units (6) bypass the respectively associated energy storage cells (5) or connect the respectively associated energy storage cells (5) into the respective energy supply branch (3-1, 3-2; 3-3), and
- in at least one of the energy supply branches (3-3), the energy storage cells (5) of the energy storage module (4-3m) connected directly to the reference rail (T-) are linked directly to the reference rail (T-) and serve as energy stores for a DC link (8).

2. Energy supply system according to Claim 1, wherein, in all the energy supply branches (3-1, 3-2, 3-3), the energy storage cells (5-1m, 5-2m, 5-3m) of the energy storage modules (4-1m, 4-2m, 4-3m) connected directly to the reference rail (T-) are linked directly to the reference rail (T-) and serve as parallel-connected energy stores for the DC link (8).

3. Energy supply system according to Claim 2, wherein the energy storage cells (5-1m, 5-2m, 5-3m) serving as energy stores for the DC link (8) are in each case connected to the DC link (8) by means of at least one diode (20-1, 20-2, 20-3).

4. Energy supply system according to one of Claims 1 to 3, wherein the energy storage cells (5-1m, 5-2m, 5-3m) serving as energy stores for the DC link (8) are connected to the DC link (8) by means of at least one inductance (10).

5. Energy supply system according to one of the preceding claims, wherein a total voltage of the energy storage cells (5-1m, 5-2m, 5-3m) serving as energy stores for the DC link (8) is less than or equal to 60 volts.

6. Energy supply system according to one of the preceding claims, wherein the DC link (8) has a link capacitor (9), which is electrically connected on one side to the reference rail (T-) and on the other side to a connection (A1, A2, A3) of the energy storage cells (5-1m, 5-2m, 5-3m) serving as energy stores, said connection being remote from the reference rail (T-).

7. Energy supply system according to one of Claims 1 to 5, wherein the DC link (8) has a link capacitor (9), which is electrically connected on one side to the reference rail (T-) and on the other side to a connection (A1, A2, A3) at an output of the energy storage modules (4-1m, 4-2m, 4-3m) comprising the energy storage cells (5-1m, 5-2m, 5-3m) serving as energy stores, said output being remote from the reference rail (T-).

8. Energy supply system according to either of Claims 6 and 7, wherein a first DC voltage converter (12) is connected downstream of the link capacitor (9), said first DC voltage converter adjusting a first voltage level of the link capacitor (9) to a second voltage level of a further energy store (13).

9. Energy supply system according to one of Claims 6 to 8, wherein a DC voltage converter (30) is connected upstream of the link capacitor (9), said DC voltage converter adjusting a total voltage of the energy storage cells (5-1m, 5-2m, 5-3m) serving as energy stores for the DC link (8) to a first voltage level of the link capacitor (9).

10. Method for charging at least one energy storage cell (5-1m; 5-2m; 5-3m) serving as an energy store for a DC link (8) in an energy supply system according to one of Claims 1 to 9, in which method, in an operating phase of the electric machine (1) in which current flows from the electric machine (1) into the controllable energy store (2), all the coupling units (6-1m, 6-2m, 6-3m) associated with the energy storage cells (5-1m, 5-2m, 5-3m) serving as energy stores for a DC link (8) are controlled in such a way that the associated energy storage cells (5-1m, 5-2m, 5-3m) are connected into the respective energy storage branch (3-1; 3-2; 3-3).

## Revendications

1. Réseau d'alimentation en énergie comportant un accumulateur d'énergie contrôlable (2) qui permet la commande et l'alimentation en énergie d'une machine électrique n-phasée (1), avec n ≥ 1, dans lequel
- l'accumulateur d'énergie contrôlable (2) comporte n branches parallèles d'alimentation en énergie (3-1, 3-2, 3-3),
• qui comportent respectivement au moins deux modules accumulateurs d'énergie (4) connectés en série, comprenant respectivement au moins une cellule accumulatrice d'énergie (5) munie d'une unité de couplage contrôlable (6) associée,
• qui peuvent d'une part être reliées à un rail de référence (-T), et
• qui peuvent d'autre part être respectivement reliées à une phase (U, V, W) de la machine électrique (1),
dans lequel les unités de couplage (6) court-circuitent les cellules accumulatrices d'énergie (5) respectivement associées en fonction de signaux de commande ou connectent les cellules accumulatrices d'énergie (5) respectivement associées dans la branche d'alimentation en énergie (3-1, 3-2 ; 3-3) respective, et
- dans au moins l'une des branches d'alimentation en énergie (3-3), les cellules accumulatrices d'énergie (5) du module accumulateur d'énergie (4-3 m) directement relié au rail de référence (T-) sont directement raccordées au rail de référence (T-) et servent d'accumulateurs d'énergie pour un circuit intermédiaire à tension continue (8).

2. Réseau d'alimentation en énergie selon la revendication 1, dans lequel, dans toutes les branches d'alimentation en énergie (3-1, 3-2, 3-3), les cellules accumulatrices d'énergie (5-1m, 5-2m, 5-3m) des modules accumulateurs d'énergie (4-1m, 4-2m, 4-3m) qui sont directement reliés au rail de référence (T-) sont directement raccordées au rail de référence (T-) et servent d'accumulateurs d'énergie connectés en parallèle pour le circuit intermédiaire à tension continue (8).

3. Réseau d'alimentation en énergie selon la revendication 2, dans lequel les cellules accumulatrices d'énergie (5-1m, 5-2m, 5-3m) servant d'accumulateurs d'énergie pour le circuit intermédiaire à tension continue (8) sont respectivement reliées au circuit intermédiaire à tension continue (8) par l'intermédiaire d'au moins une diode (20-1, 20-2, 20-3).

4. Réseau d'alimentation en énergie selon l'une quelconque des revendications 1 à 3, dans lequel les cellules accumulatrices d'énergie (5-1m, 5-2m, 5-3m) servant d'accumulateurs d'énergie pour le circuit intermédiaire à courant continu (8) sont reliées au circuit intermédiaire à tension continue (8) par l'intermédiaire d'au moins une inductance (10).

5. Réseau d'alimentation en énergie selon l'une quelconque des revendications précédentes, dans lequel une tension totale des cellules accumulatrices d'énergie (5-1m, 5-2m, 5-3m) servant d'accumulateurs d'énergie pour le circuit intermédiaire à tension continue (8) est inférieure ou égale à 60 volts.

6. Réseau d'alimentation en énergie selon l'une quelconque des revendications précédentes, dans lequel le circuit intermédiaire à tension continue (8) comprend un condensateur de circuit intermédiaire (9) qui est relié électriquement, d'une part au rail de référence (T-) et, d'autre part à une borne (A1, A2, A3) opposée au rail de référence (T-) des cellules accumulatrices d'énergie (5-1m, 5-2m, 5-3m) servant d'accumulateurs d'énergie.

7. Réseau d'alimentation en énergie selon quelconque les revendications 1 à 5, dans lequel le circuit intermédiaire à tension continue (8) comprend un condensateur de circuit intermédiaire (9) qui est relié électriquement d'une part au rail de référence (T-) et d'autre part à une borne (A1, A2, A3) au niveau d'une sortie opposée au rail de référence (T-) des modules accumulateurs d'énergie (4-1m, 4-2m, 4-3m), qui comprennent les cellules accumulatrices d'énergie (5-1m, 5-2m, 5-3m) servant d'accumulateurs d'énergie.

8. Réseau d'alimentation en énergie selon l'une quelconque des revendications 6 ou 7, dans lequel le condensateur de circuit intermédiaire (9) est suivi d'un premier convertisseur à tension continue (12) qui adapte un premier niveau de tension du condensateur de circuit intermédiaire (9) à un second niveau de tension d'un autre accumulateur d'énergie (13).

9. Réseau d'alimentation en énergie selon l'une quelconque des revendications 6 à 8, dans lequel le condensateur de circuit intermédiaire (9) est précédé d'un convertisseur à tension continue (30) qui adapte une tension totale des cellules accumulatrices d'énergie (5-1m, 5-2m, 5-3m) servant d'accumulateurs d'énergie pour le circuit intermédiaire à courant continu (8) à un premier niveau de tension du condensateur de circuit intermédiaire (9).

10. Procédé pour charger au moins une cellule accumulatrice d'énergie (5-1 m ; 5-2m ; 5-3m ; 5-3m) servant d'accumulateurs d'énergie pour un circuit intermédiaire à courant continu (8) dans un réseau d'alimentation d'énergie selon l'une quelconque des revendications 1 à 9, dans lequel, dans une phase de fonctionnement de la machine électrique (1) dans laquelle le courant circule de la machine électrique (1) vers l'accumulateur d'énergie contrôlable (2), toutes les unités de couplage (6-1m ; 6-2m, 6-3m) qui sont associées aux cellules accumulatrices d'énergie (5-1m, 5-2m, 5-3m) servant d'accumulateurs d'énergie pour le circuit intermédiaire à courant continu (8), sont commandées de manière à ce que les cellules accumulatrices d'énergie (5-1m, 5-2m, 5-3m) associées soient connectées à la branche d'alimentation en énergie respective (3-1 ; 3-2 ; 3-3) .
